(19) Europäisches Patentamt
European Patent Office
Office européen des brevets

(11) **EP 1 978 005 A1**

(12) **EUROPEAN PATENT APPLICATION**
published in accordance with Art. 158(3) EPC

(43) Date of publication:
08.10.2008 Bulletin 2008/41

(51) Int Cl.:
*C04B 35/50* (2006.01)    *B29C 33/38* (2006.01)

(21) Application number: 06843407.5

(22) Date of filing: 27.12.2006

(86) International application number:
PCT/JP2006/326025

(87) International publication number:
WO 2007/086228 (02.08.2007 Gazette 2007/31)

(84) Designated Contracting States:
NL

(30) Priority: 26.01.2006 JP 2006017335

(71) Applicants:
• Towa Corporation
Kyoto 6018105 (JP)
• Japan Fine Ceramics Center
Nagoya-shi,
Aichi 4568587 (JP)

(72) Inventors:
• KUNO, Takaki
Kyoto 6018105 (JP)
• NOGUCHI, Yoshinori
Kyoto 6018105 (JP)

• MAEDA, Keiji
Kyoto 6018105 (JP)
• KITAOKA, Satoshi
Aichi 4568587 (JP)
• KAWASHIMA, Naoki
Aichi 4568587 (JP)
• YOSHIYA, Masato
Aichi 4568587 (JP)
• SUDA, Seiichi
Aichi 4568587 (JP)

(74) Representative: Lipscombe, Martin John et al
Nash Matthews
90-92 Regent Street
Cambridge CB2 1DP (GB)

(54) **LOW-ADHESION MATERIAL, MOLDS FOR MOLDING RESINS, AND STAINPROOF MATERIAL**

(57) A resin molding die (1) has a molding surface (6) formed of a low adhesion material (3) formed of a solid solution of La- $Y_2O_3$ produced from $Y_2O_3$ and an other oxide of $La_2O_3$. $La_2O_3$ contains La, which has an ionic radius larger than $Y^{3+}$, and is larger in basicity than $Y_2O_3$. The low adhesion material (3) contains $La_2O_3$ at a predetermined ratio relative to a total of $Y_2O_3$ and $La_2O_3$. The low adhesion material (3) thus has a large ionic radius contributing to a smaller number of sites per unit area than $Y_2O_3$, a larger basicity contributing to a smaller force binding the low adhesion material with a basic substance than $Y_2O_3$, and a ratio contributing to shape retention. The low adhesion material (3) thus less adhesive and more shape-retentive than $Y_2O_3$ configures the molding surface (6). A low adhesion material that is less adhesive to a basic substance than $Y_2O_3$ is and excellently shape-retentive, and an excellently releasable and shape-retentive resin molding die can thus be obtained.

FIG. 4

**Description**

TECHNICAL FIELD

The present invention relates to a material less adhesive to basic substances (the material will hereinafter be referred to as "low adhesion material"), a resin molding die at least having a molding surface formed of such low adhesion material, and a soil resistant material having a function preventing an organic matter from soiling the same and thus adhering thereto.

BACKGROUND ART

Conventionally, transfer molding, injection molding, compression molding and the like are employed to complete a molded object having set resin. More specifically, a fluid resin is introduced into a cavity of a resin molding die and set to complete the molded object. The die is formed mainly of tool steel. Furthermore, an ejection mechanism is used to eject the molded object out of the die to help to remove the molded object.
Herein, to help to remove the molded object, it is preferable to improve the releasability between the molding surface of the die and the set resin, i.e., to reduce the adhesion therebetween. To do so, for example, polytetrafluoroethylene, silicone rubber and other similar organic material that has good non-wettability to fluid resin is considered as potential materials for improving the releasability between the molding surface of the die and the set resin.
A method of spraying or applying such organic material as a highly releasable material on a molding surface of a die and then drying the material to coat the surface has been proposed (see Japanese Patent Laying-open No. 7-329099, or Patent Document 1, pages 3 and 4, for example). This method in a way implements an excellently releasable resin molding die.
Furthermore when an electronic component in the form of a chip such as a large scale integration (LSI) chip mounted to a lead frame, a printed board, or the like (hereinafter simply referred to as a "chip") is sealed with resin, a thermosetting resin containing a ceramic filler, such as basic epoxy resin, is used as a fluid resin. Since the filler wears the molding surface of the die, a wear resistant, metal based high hardness material is deposited on the surface of the die.
In that case, Cr, TiC, CrN or a similar, excellently wear resistant, metal based, high hardness material is used to plate or deposited on the surface of the die by physical vapor deposition (PVD), chemical vapor deposition (CVD) or the like to coat the surface.
Furthermore, if a chip is sealed with resin, it is preferable to minimize the external force exerted to a molded object in releasing the object from the die to ensure that a completed product (or package) produced from the object is reliable. Accordingly there is a demand for a material forming a molding surface of a die, that is excellent in releasability.
Furthermore the present inventors have found that $Y_2O_3$, which provides a sintered compact stable in the air, has good releasability from epoxy resin, and have proposed to use $Y_2O_3$ to form a molding surface of a die (see Japanese Patent Laying-open No. 2005-274478, or Patent Document 2, page 8). Herein, epoxy resin is a basic resin and $Y_2O_3$ is a basic oxide. From this, the fact that $Y_2O_3$ has good releasability from basic epoxy resin is considered to indicate that a basic material is appropriate as a material excellent in releasability from epoxy resin.
Furthermore, when a material binds to a basic substance, they are bound by a force, which is considered to be smaller when the material is larger in basicity. Accordingly, a basic oxide larger in basicity than $Y_2O_3$ is considered as a material further more excellent in releasability than $Y_2O_3$, i.e., a material further less adhesive than $Y_2O_3$. Herein throughout the specification the terms "basic", "basicity" and the like mean a property providing an electron pair or that accepting a proton (see Rikagaku Jiten, 4th edition, Iwanami Shoten, 1987, p.161 for example).
Furthermore, not only does a resin molding die but members having surfaces exposed to fluid epoxy resin or a similar basic substance also allow small amounts of set resin and the like to readily adhere thereto. If such members with such set resin and the like adhering thereto are continuously used, their surfaces are soiled with the set resin and the like adhering thereto.

Patent Document 1: Japanese Patent Laying-open No. 7-329099 (pages 3 and 4)
Patent Document 2: Japanese Patent Laying-open No. 2005-274478 (page 8)

DISCLOSURE OF THE INVENTION

PROBLEMS TO BE SOLVED BY THE INVENTION

The above described conventional art has the following disadvantages:

First, dies, members and the like formed of conventional materials have surfaces allowing set resin and the like to readily soil them and thus stick thereto. To remove such soil, they must have their surfaces cleaned periodically, which is cumbersome.

Second, if a die is formed of conventional material the die has a molding surface allowing set resin to readily stick thereto. Accordingly, a large number of ejection mechanisms is required to remove a molded object from the die. This invites increasing the die in size and rendering it complex.

Third, if polytetrafluoroethylene, silicone rubber or a similar organic material is used to coat a molding surface of a die, such organic material is readily worn. It is thus difficult in reality to use such organic material alone as a highly releasable material improving a die in releasability.

Fourth, if Cr, TiC, CrN or a similar, excellently wear resistant, metal based, high hardness material is deposited on a molding surface of a die, insufficient releasability is provided between the metal based, high hardness material and the surface of the die, since the high hardness material has insufficient non-wettability to fluid resin. In particular, when a chip sealed with resin, or a molded object, is removed from a die, it is required in view of reliability that the external force exerted to the molded object should be minimized. As such, the aforementioned insufficient releasability is a serious disadvantage.

Fifth, when a basic oxide alone that is larger in basicity than $Y_2O_3$ is left exposed to the air, it readily absorbs the moisture and carbon dioxide present in the air and thus produces hydroxide and carbonate. As such, when a sintered compact formed of such basic oxide alone is left exposed to the air, it comes to decay, deliquescence, or the like. It can thus be said that such basic oxide alone is low in chemical stability in the air and hence has a shape retentive property (a property maintaining a fixed geometry) that is poor in the air, and is thus inappropriate as a material for a resin molding die.

The present invention contemplates a low adhesion material that is less adhesive to a basic substance than $Y_2O_3$ is and that is also excellently shape-retentive, an excellently releasable and shape-retentive resin molding die, and a soil resistant material having a function preventing an organic matter from soiling the same and thus adhering thereto.

MEANS FOR SOLVING THE PROBLEMS

The present invention provides a low adhesion material having a low adhesion property with respect to a basic substance. The low adhesion material is produced at least from a first material of $Y_2O_3$ and a second material, and is shape-retentive, i.e., has a property maintaining a fixed geometry, when the second material has a ratio having a predetermined value relative to a total of the first and second materials. The second material is formed of an oxide. The oxide satisfies at least one of the condition that the oxide contains a substance having an ionic radius larger than $Y^{3+}$ and the condition that the oxide is larger in basicity than the first material.

Furthermore, desirably, the present low adhesion material includes the second material that is formed of $L_{a2}O_3$, and at least includes a solid solution produced from the first and second materials.

Furthermore the present low adhesion material may include the second material that is formed of $La_2O_3$, and include a composite oxide produced at least from the first and second materials.

Furthermore the present low adhesion material may include the second material that is formed of $La_2O_3$, and be a mixture at least including a solid solution produced from $Y_2O_3$ and $La_2O_3$ and a composite oxide produced from $Y_2O_3$ and $La_2O_3$.

Furthermore the present low adhesion material may include the second material that is formed of SrO, and include a solid solution produced from the first and second materials.

Furthermore the present low adhesion material may include the second material that is formed of SrO, and include a composite oxide produced from the first and second materials.

Furthermore the present low adhesion material may include the second material that is formed of SrO, and be a mixture including a solid solution produced from $Y_2O_3$ and SrO and a composite oxide produced from $Y_2O_3$ and SrO.

The present invention in another aspect provides a low adhesion material having a low adhesion property with respect to a basic substance. The low adhesion material is produced at least from a first material of $Y_2O_3$ and a plurality of materials other than the first material, and is shape-retentive, i.e., has a property maintaining a fixed geometry, when the plurality of materials each have a ratio having a predetermined value relative to a total of the first material and the plurality of materials. The plurality of materials are each formed of an oxide. The oxide each satisfies at least one of the condition that the oxide contains a substance having an ionic radius larger than $Y^{3+}$ and the condition that the oxide is larger in basicity than the first material.

The present invention also provides a resin molding die having a cavity and used to set basic fluid resin introduced in the cavity to provide set resin, the resin molding die having a molding surface defined by a surface exposed to the fluid resin, the resin molding die having a low adhesion property between the molding surface and the set resin. The molding surface has at least a portion formed of a low adhesion material. The low adhesion material is produced at least from a first material of $Y_2O_3$ and a second material, and is shape-retentive, i.e., has a property maintaining a fixed geometry, when the second material has a ratio having a predetermined value relative to a total of the first and second materials. The second material is formed of an oxide. The oxide satisfies at least one of the condition that the oxide contains a substance having an ionic radius larger than $Y^{3+}$ and the condition that the oxide is larger in basicity than the first material.

The present invention also provides a resin molding die having a cavity and used to set basic fluid resin introduced in the cavity to provide set resin, the resin molding die having a molding surface defined by a surface exposed to the fluid resin, the resin molding die having a low adhesion property between the molding surface and the set resin. The molding surface has at least a portion formed of a low adhesion material. The low adhesion material is produced at least from a first material of $Y_2O_3$ and a plurality of materials other than the first material and is shape-retentive when the plurality of materials each have a ratio having a predetermined value relative to a total of the first material and the plurality of materials. The plurality of materials are each formed of an oxide. The oxide each satisfies at least one of the condition that the oxide contains a substance having an ionic radius larger than $Y^{3+}$ and the condition that the oxide is larger in basicity than the first material.

EFFECTS OF THE INVENTION

The present invention can provide three effects, as follows:

First, the present invention can provide a low adhesion material containing in its source material(s) an oxide larger in basicity than $Y_2O_3$. The low adhesion material containing such oxide in its source material(s) and a basic substance will be bound by a force smaller than when $Y_2O_3$ is alone used. A low adhesion material less adhesive to a basic substance than $Y_2O_3$ alone is can thus be obtained.

Second, the present invention can provide a low adhesion material containing in its source material(s) an oxide containing a substance having an ionic radius larger than $Y^{3+}$, and such low adhesion material containing such oxide in its source material(s) can be less adhesive to a substance than $Y_2O_3$ alone is. This is considered to be based on the following ground:

In accordance with the present invention $Y_2O_3$ and an oxide containing a substance having an ionic radius larger than $Y^{3+}$ are used to produce a low adhesion material. Accordingly the low adhesion material has a surface with a smaller number of ions exposed per unit area than $Y_2O_3$ alone does. This provides a reduced number of sites per unit area. These sites contribute to chemical bonding of a molecule of a substance and that of the low adhesion material. This is considered as a reason for allowing the low adhesion material to be less adhesive to the substance than $Y_2O_3$ alone is.

Third, relative to a total of $Y_2O_3$ and a second material, the second material that is formed of an oxide larger in basicity than $Y_2O_3$ has a predetermined ratio. Alternatively, relative to a total of $Y_2O_3$ and a plurality of materials other than $Y_2O_3$, the plurality of materials that are formed of oxides each larger in basicity than $Y_2O_3$ each have a predetermined ratio. With such predetermined ratio, the low adhesion material is shape-retentive.

Thus, in spite of containing an oxide larger in basicity than $Y_2O_3$, i.e., an oxide less stable in the air than $Y_2O_3$, the low adhesion material can be satisfactorily shape-retentive. Furthermore, the low adhesion material can be more shape-retentive than such oxide alone or each of such oxides alone. Note that throughout the specification a "plurality of materials" means a "plurality of types of materials".

Furthermore the present low adhesion material contains at least one of a solid solution and a composite oxide. The solid solution and the composite oxide are produced from $Y_2O_3$ and $La_2O_3$, respectively, or $Y_2O_3$ and SrO, respectively. $La_2O_3$ and SrO are both oxides larger in basicity than $Y_2O_3$.

Thus there can be obtained a low adhesion material containing at least one of a solid solution and a composite oxide that are each less adhesive to a basic substance than $Y_2O_3$ alone is. Furthermore, La and Sr are both substances each having an ionic radius larger than $Y^{3+}$. Thus there can be obtained a low adhesion material containing at least one of a solid solution and a composite oxide that are less adhesive to a substance than $Y_2O_3$ alone is.

In addition, for the solid solution and the composite oxide, the following two points can be said for the ratio of their materials. First, relative to a total of $Y_2O_3$ and $La_2O_3$, the $La_2O_3$ has a predetermined ratio. Second, relative to a total of $Y_2O_3$ and SrO, the SrO has a predetermined ratio.

This allows the solid solution and the composite oxide to provide a satisfactorily better shape retentive property than an oxide alone that is larger in basicity than $Y_2O_3$, i.e., an oxide ($La_2O_3$ or SrO) alone that is significantly less shape-retentive than $Y_2O_3$. Thus, in spite of containing an oxide less stable in the air than $Y_2O_3$, the low adhesion material can have a good shape retentive property.

Furthermore, the present low adhesion material is formed of a mixture. Specifically, such mixture has two types. One type of mixture at least contains a solid solution and a composite oxide produced from $Y_2O_3$ and $La_2O_3$, respectively.

The other type of mixture at least contains a solid solution and a composite oxide produced from $Y_2O_3$ and SrO, respectively.

As has been described above, the solid solution and the composite oxide are less adhesive to a substance (a basic substance in particular) than $Y_2O_3$ alone is, and satisfactorily more shape-retentive than an oxide ($La_2O_3$ or SrO) alone that is less shape-retentive than $Y_2O_3$. Thus, in spite of being formed of a mixture of the solid solution and the composite oxide and also containing an oxide less stable in the air than $Y_2O_3$, the low adhesion material can be satisfactorily shape-retentive.

Furthermore the present resin molding die has at least a portion of a molding surface thereof exposed to a basic fluid resin, that is formed of a low adhesion material. The low adhesion material is formed at least of a first material of $Y_2O_3$ and a second material, or $Y_2O_3$ and a plurality of materials other than $Y_2O_3$. The second material and the plurality of materials other than $Y_2O_3$ are each formed of an oxide. The oxide satisfies at least one of the condition that it contains a substance having an ionic radius larger than $Y^{3+}$ and the condition that it is larger in basicity than $Y_2O_3$.

Thus the low adhesion material is less adhesive to set resin (a basic set resin in particular) than $Y_2O_3$ alone is. As the low adhesion material functions as a highly releasable material, there can be obtained a resin molding die that has a molding surface less adhesive to basic set resin, in particular, than $Y_2O_3$ alone is, i.e., that is high in releasability.

In addition, in the low adhesion material, relative to a total of $Y_2O_3$ and the second material, the second material that is formed an oxide larger in basicity than $Y_2O_3$ has a predetermined ratio, or relative to a total of $Y_2O_3$ and a plurality of materials other than $Y_2O_3$, the plurality of materials that are formed of oxides each larger in basicity than $Y_2O_3$ each have a predetermined ratio. With such predetermined ratio, the low adhesion material is shape-retentive.

Thus, in spite of containing an oxide larger in basicity than $Y_2O_3$, i.e., an oxide less stable in the air than $Y_2O_3$, the low adhesion material can be satisfactorily shape-retentive. The resin molding die can thus have a molding surface at least partially formed of a satisfactorily shape-retentive low adhesion material.

The present low adhesion material can also be used as a soil resistant material having a function preventing an organic matter from soiling the same and thus adhering thereto.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a flowchart of a method of producing a low adhesion material of a first embodiment of the present invention.
Fig. 2 shows a relationship between an amount of $La_2O_3$ added relative to a total of $Y_2O_3$ and the added $La_2O_3$ in the source materials of the low adhesion material of the first embodiment of the present invention, and the adhesion strength provided between a product produced from the $Y_2O_3$ and the $La_2O_3$ and a basic substance, i.e., epoxy resin.
Fig. 3 shows a relationship between an amount of SrO added relative to a total of $Y_2O_3$ and the added SrO in the source materials of a low adhesion material of a second embodiment of the present invention, and the adhesion strength provided between a product produced from the $Y_2O_3$ and the SrO and a basic substance, i.e., epoxy resin.
Fig. 4 is a cross section of a resin molding die of a third embodiment of the present invention.
Fig. 5 is a cross section of the resin molding die of Fig. 4 in an exemplary variation.

DESCRIPTION OF THE REFERENCE SIGNS

1, 10: top portion (of resin molding die), 2: bottom portion thereof, 3: highly releasable material (or low adhesion material), 4: resin flow channel, 5: cavity, 6 molding surface, 7: substrate, 8: chip, 9: wire, 11: molding die's main body, 12: mold releasing layer

BEST MODES FOR CARRYING OUT THE INVENTION

The present invention provides a resin molding die 1, 10 that is used to set basic fluid resin to provide set basic resin and provides a low adhesion property between a molding surface 6, which is a surface exposed to the fluid resin, and the set resin. Resin molding die 1, 10 has molding surface 6 formed of a low adhesion material 3.

Low adhesion material 3 is a solid solution produced from $Y_2O_3$ and an other oxide. The oxide is $La_2O_3$, which contains La, a substance having an ionic radius larger than $Y^{3+}$, and is larger in basicity than $Y_2O_3$. Low adhesion material 3 contains $La_2O_3$ at a predetermined ratio relative to a total of $Y_2O_3$ and $La_2O_3$, and with such ratio, low adhesion material 3 is shape-retentive.

First Embodiment

The present low adhesion material has a low adhesion property with respect to a basic substance (e.g., epoxy resin) and has the following two features:

First, it is produced at least from a first material of $Y_2O_3$ and an other material (a single type of material or a plurality of types of materials) other than the first material. The other material/materials is/are formed of an oxide/oxides that contains/each contain a substance having an ionic radius larger than $Y^{3+}$ and/or is/are larger in basicity than $Y_2O_3$.

Second, relative to a total of $Y_2O_3$ and the other material/materials, the other material/materials has/each have a predetermined ratio, and with such predetermined ratio, the low adhesion material is shape-retentive. Note that if the other materials is a plurality of types of materials, the materials each have a predetermined ratio.

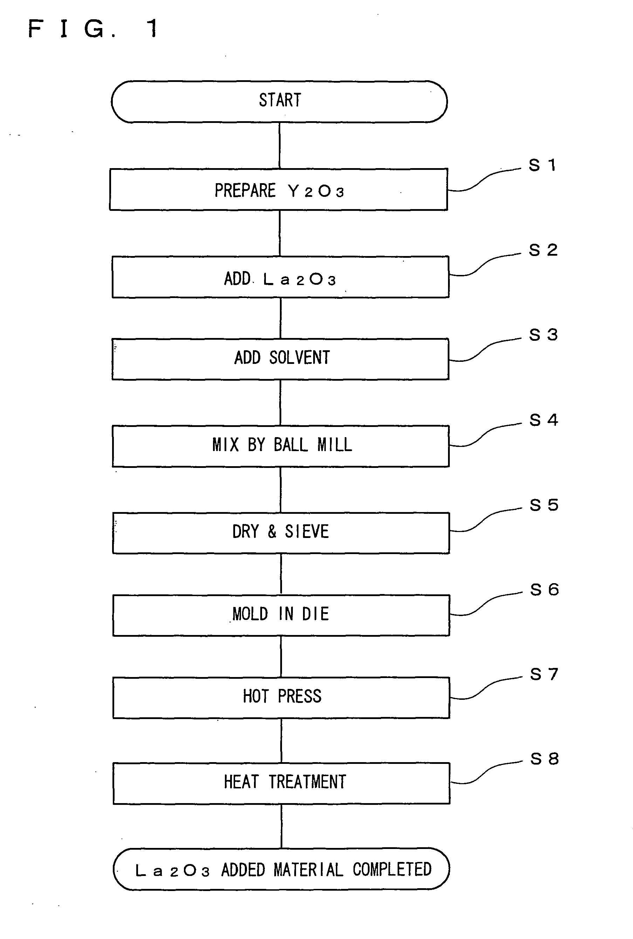

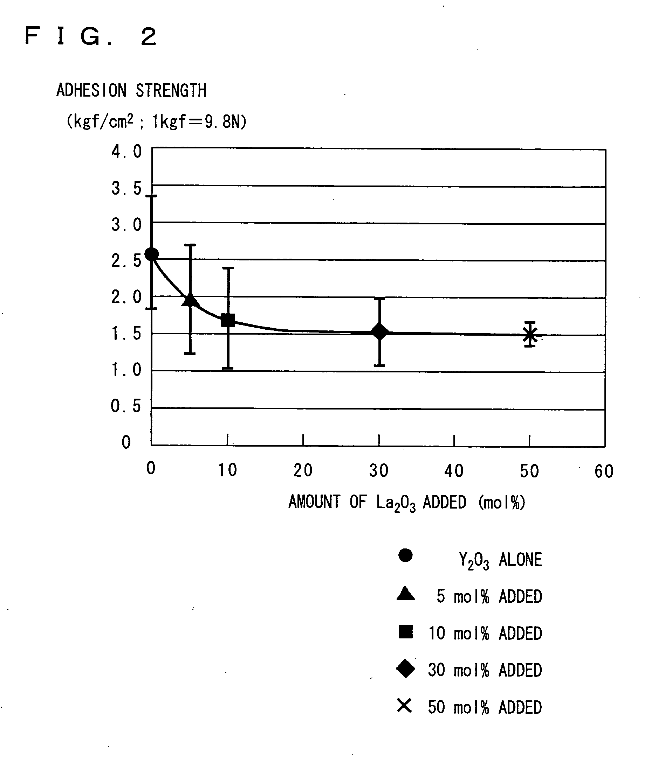

The present low adhesion material in a first embodiment will now be described with reference to Figs. 1 and 2. Fig. 1 is a flowchart of a method of producing the low adhesion material in the present embodiment. Fig. 2 shows a relationship between an amount of $La_2O_3$ added relative to a total of $Y_2O_3$ and the added $La_2O_3$ in the source materials of the low adhesion material of the present embodiment, and the adhesion strength provided between a product produced from the $Y_2O_3$ and the $La_2O_3$ and a basic substance, i.e., epoxy resin.

It should be noted that an "amount" of $La_2O_3$ "added", as referred to herein, means an amount added in the source materials of a sample used to obtain the data of Fig. 2, rather than a ratio of $La_2O_3$ in the sample per se, i.e., a ratio obtained by actually analyzing the sample.

Furthermore, an "amount of $La_2O_3$ ... relative to a total of $Y_2O_3$ and the $La_2O_3$" and similar expressions mean an amount of $La_2O_3$ in mol% for a total amount of 100 mol% of $Y_2O_3$ and $La_2O_3$. The expressions "an (the) amount added" and "... relative to a (the) total ... "appearing in the following description are also similarly used.

The present embodiment adopts a low adhesion material of a $La_2O_3$- $Y_2O_3$ pseudo binary system material produced from a first material of $Y_2O_3$ and a second material of $La_2O_3$, as based on an experiment and an analysis. More specifically, of such $La_2O_3$-$Y_2O_3$ pseudo binary system materials, a solid solution of La-$Y_2O_3$, a mixture of a solid solution of La-$Y_2O_3$ and a composite oxide of $LaYO_3$, and a composite oxide of $LaYO_3$ are adopted. These low adhesion materials contain substances and source materials adopted as follows:

First, La is adopted as a substance having an ionic radius larger than $Y^{3+}$, which is an ion of Y contained in the first material of $Y_2O_3$. Note that $Y^{3+}$ has an ionic radius of 1.02 Å (102 pm) and $La^{3+}$ has an ionic radius of 1.16 Å (116 pm), wherein 1 pm = 10-12 m. $La_2YO_3$ is adopted as a second material formed of an oxide satisfying both the condition that it contains a substance (La) having an ionic radius larger than $Y^{3+}$ and the condition that it is larger in basicity than $Y_2O_3$.

Herein, an isoelectric point of surface (IEPS) is used as an index indicating the acidity/basicity of a surface of an oxide. An IEPS larger than 7 indicates basicity and that smaller than 7 indicates acidity. The value of an IEPS can be represented by a ratio of an electric charge of a cation (a positive ion) configuring an oxide and its ionic radius (see George A. Parks, "The Isoelectric Points of Solid Oxides, Solid Hydroxides, and Aqueous Hydroxo Complex System", 65, 177-198 (1965)).

An IEPS is represented by the following expressions:

$$\mathrm{IEPS} = A - B[(Z/R) + 0.029C + a] \qquad \dots \qquad (1)$$

where
Z: valence of cation

$$R = r^+ + 2r0 \qquad \dots \qquad (2)$$

$r^+$: radius of cation (Å)
$r0$: radius of oxygen ion (Å)
A, B: constant
C: correction coefficient for crystalline field stabilization energy of M-OH bond
a: coefficient for coordination number of hydrate (associated with Coulomb attraction energy between proton and oxygen ion of M-hydroxyl group).

Expressions (1) and (2) provide an IEPS indicating 9.5 for $Y_2O_3$ and 9.8 for $La_2O_3$. It can be said that $La_2O_3$ is further larger in basicity than $Y_2O_3$.

In the present embodiment the low adhesion material is produced in a method, e.g., a powder mixture method, as will be described hereinafter with reference to Fig. 1.

Initially at step S1 the first material or $Y_2O_3$ in the form of powder is prepared in an amount as required. Then at step S2 the second material or $La_2O_3$ in the form of powder is added in a predetermined amount and furthermore at step S3 a solvent is added thereto. Then at step S4 a ball mill is used to mix them together. Then at step S5 the mixture is dried and sieved. Then at step S6 a die used to form a predetermined shape is used to mold the mixture with a predetermined pressure exerted thereto.

Then at step S7 the molded object is hot-pressed at a predetermined temperature for a predetermined period of time. It is thus pressurized and burnt. More specifically, it is thus processed for example at 1,350°C for one hour with a pressure of 40 MPa exerted to press it. Then at step S8 the pressurized and burnt, sintered compact is subjected to a heat treatment at a predetermined temperature for a predetermined period of time to facilitate a reaction providing a solid solution or a composite oxide. The treatment in this case is performed for example at 1,550°C for 5 hours.

Steps S1-S8 can provide a low adhesion material formed of a sintered compact of a $La_2O_3$-$Y_2O_3$ pseudo binary system material and having a predetermined shape. Note that the method of producing the low adhesion material may be coprecipitation.

Fig. 2 shows a relationship between an amount of $La_2O_3$ added relative to a total of $Y_2O_3$ and the added $La_2O_3$ in the source materials, and the adhesion strength provided between a product produced from the $Y_2O_3$ and the $La_2O_3$ (i.e., a $La_2O_3$-$Y_2O_3$ pseudo binary system material) and a basic substance, i.e., epoxy resin. In the following description it is assumed that the low adhesion material is applied to a resin molding die.

In the present embodiment, $La_2O_3$ is added in four different amounts of 5 mol%, 10 mol%, 30 mol% and 50 mol% relative to a total amount of $Y_2O_3$ and the added $La_2O_3$ in the source materials. $La_2O_3$-$Y_2O_3$ pseudo binary system materials having the four amounts added, respectively, are used to prepare samples in the method as described above.

Each sample and a material with 0 mol% of $La_2O_3$, i.e., $Y_2O_3$ alone, are used to conduct an experiment and obtain data, which is used to calculate adhesion strength. A result thereof shows, as shown in Fig. 2, that as the amount of $La_2O_3$ added increases, the adhesion strength decreases. Furthermore it has been found that the values in adhesion strength shown in Fig. 2 all fall within a range applicable as a low adhesion material for a resin molding die. Furthermore, the samples are all satisfactorily shape retentive to such an extent that they can be used for the resin molding die.

Furthermore the $La_2O_3$-$Y_2O_3$ pseudo binary system materials corresponding to the samples prepared from the first material of $Y_2O_3$ and the second material of $La_2O_3$ are analyzed and a result is obtained, as follows: The samples containing $La_2O_3$ added in amounts of 5 mol% and 10 mol% are a $Y_2O_3$ solid solution, i.e., a solid solution of La-$Y_2O_3$.

The sample containing $La_2O_3$ added in an amount of 30 mol% is a mixture of a solid solution of La-$Y_2O_3$ and a composite oxide of $LaYO_3$. The sample containing $La_2O_3$ added in an amount of 50 mol% is a composite oxide of $LaYO_3$. Therefrom it can be said that a solid solution of La-$Y_2O_3$, a mixture of a solid solution of La-$Y_2O_3$ and a composite oxide of $LaYO_3$, and a composite oxide of $LaYO_3$ all have small adhesion strength falling within a range applicable as a low adhesion material for a resin molding die, and a shape retentive property of an extent applicable to the resin molding die.

The solid solution of La-$Y_2O_3$, the mixture of the solid solution of La-$Y_2O_3$ and the composite oxide of $LaYO_3$, and the composite oxide of $LaYO_3$ all correspond to the present low adhesion material.

The adhesion strength shown in Fig. 2 is measured as follows: First, epoxy resin, a thermosetting resin, is prepared as a basic substance. Then the epoxy resin is brought into contact with the $La_2O_3$-$Y_2O_3$ pseudo binary system material and set in an ambient of 175°C to provide set epoxy resin. The set epoxy resin and the pseudo binary system material thus adhere to each other.

Then the set resin and the pseudo binary system material are pulled in an ambient of 175°C in a direction perpendicular to the interface of the adhesion and when they peel off the current load exerted is measured. Then the load is divided by the area of the interface of the adhesion to calculate the adhesion strength between the pseudo binary system material and the set resin. This adhesion strength corresponds to a mold releasing strength, a strength per unit area that is required to release the set resin from the resin molding die formed of the pseudo binary system material.

The present embodiment can provide a low adhesion material that has a small adhesion strength falling within a range applicable to a resin molding die and a satisfactory shape retentive property of an extent applicable to the resin molding die. The low adhesion material having the small adhesion strength is obtained possibly on two grounds associated with ionic radius and basicity, as follows:

First, the low adhesion material is obtained possibly because the $La_2O_3$-$Y_2O_3$ pseudo binary system material contains La, a substance having an ionic radius larger than $Y^{3+}$. More specifically, by $Y_2O_3$ with $La^{3+}$, which has an ionic radius larger than $Y^{3+}$, contained therein, the pseudo binary system material can have a surface exposing a smaller number of cations per unit area than $Y_2O_3$ alone can.

As a result the pseudo binary system material has a surface having a smaller number of sites contributing to chemical bonding of a molecule of a substance (in the present embodiment, epoxy resin) and that of a surficial cation with oxygen serving as an intermediate than $Y_2O_3$ alone does. This is considered as a reason allowing the low adhesion material (the $La_2O_3$-$Y_2O_3$ pseudo binary system material) to be less adhesive to the substance than $Y_2O_3$ alone is.

Second, the low adhesion material is obtained possibly because the $La_2O_3$-$Y_2O_3$ pseudo binary system material contains $La_2O_3$, an oxide larger in basicity than $Y_2O_3$. This is considered as a reason allowing the pseudo binary system material to be larger in basicity than $Y_2O_3$ alone and thus further closer in basicity to epoxy resin.

Accordingly the pseudo binary system material and the basic substance are bounded by a force smaller than when $Y_2O_3$ alone and the basic substance are done so. This is considered as a reason allowing the low adhesion material (i.e., the $La_2O_3$-$Y_2O_3$ pseudo binary system material) to be superior to $Y_2O_3$ alone.

The range of adhesion strength required varies with the application of the low adhesion material. If the low adhesion material is applied to a resin molding die, the low adhesion material may be such a material that the amount of $La_2O_3$ added thereto is 0 mol%, i.e., $Y_2O_3$ alone, from a practical point of view. In other words, such a material that the amount of $La_2O_3$ added thereto is 0 mol%, that has an adhesion strength of approximately 2.57 kgf/cm$^2$ (25.2 N/cm$^2$) in Fig. 2, is applicable as the low adhesion material for the resin molding die.

On the other hand, some applications require a furthermore excellently releasable material, i.e., a material having a furthermore smaller adhesion strength, from a practical point of view. Herein, as is apparent from Fig. 2, the adhesion strength between the low adhesion material, or the $La_2O_3$-$Y_2O_3$ pseudo binary system material, and a basic substance can further be reduced by increasing the amount of $La_2O_3$ added in the source materials.

The $La_2O_3$-$Y_2O_3$ pseudo binary system material formed of the first material of $Y_2O_3$ and the second material of $La_2O_3$ that contains the $La_2O_3$ added in further increased amounts in the source materials is, however, disadvantageously reduced in stability in the air. This is attributed to that $La_2O_3$ has a nature allowing it to absorb the water vapor and carbon dioxide present in the air, i.e., that it is low in stability in the air (for this nature, see Rikagaku Jiten, forth edition, Iwanami Shoten, 1987, p 503, for example), and this prevents the $La_2O_3$-$Y_2O_3$ pseudo binary system material from maintaining its shape and hence prevents the resin molding die from maintaining its shape.

Accordingly in view of shape retention it is necessary to determine an upper limit for the amount of $La_2O_3$ added in the source materials of the $La_2O_3$-$Y_2O_3$ pseudo binary system material and as a result it is necessary to determine an upper limit for the ratio of $La_2O_3$ in the $La_2O_3$-$Y_2O_3$ pseudo binary system material produced. Note that the "ratio of $La_2O_3$" as referred to herein means a ratio of the second material of $La_2O_3$ relative to a total of the first material of $Y_2O_3$ and the second material of $La_2O_3$ in the pseudo binary system material produced. In other words, it means a ratio obtained by actually analyzing the pseudo binary system material. The term "ratio" in the following description is also similarly used.

Accordingly, relative to the total of the first material of $Y_2O_3$ and the second material of $La_2O_3$ in the $Y_2O_3$-$La_2O_3$ pseudo binary system material, the second material of $La_2O_3$ has a ratio having a range, which is determined in the following procedure: Initially, a substance obtained by subjecting a $Y_2O_3$-$La_2O_3$ mixture material to a heat treatment is assumed. Then in accordance with a phase diagram a range of a ratio of $La_2O_3$ that allows the assumed substance to exist as a predetermined substance is found.

The "predetermined substance" as referred to herein is any of the solid solution of La-$Y_2O_3$, the mixture of the solid solution of La-$Y_2O_3$ and the composite oxide of $LaYO_3$, and the composite oxide of $LaYO_3$. The found ratio range is adopted as the range of the ratio of $La_2O_3$.

The phase diagram used herein is found in a document "Phase Diagram of the System La2O3-Y2O3 at High Temperatures" (Masao MIZUNO et al., Yogyo-Kyokai-Shi, 84, [7] 347 (1976)). According to this phase diagram, the $La_2O_3$-$Y_2O_3$ pseudo binary system material can exist as any of the solid solution of La-$Y_2O_3$, the mixture of the solid solution of La-$Y_2O_3$ and the composite oxide of $LaYO_3$, and the composite oxide of $LaYO_3$ when $La_2YO_3$ has a ratio falling within a range having a lower limit exceeding 0 mol% and an upper limit in a vicinity of 75 mol%.

This shows that the low adhesion material of the present embodiment can be obtained when the $La_2O_3$-$Y_2O_3$ pseudo binary system material contains $La_2O_3$ at a ratio falling within a range exceeding 0 mol% and at most approximately 75 mol%. Note that if $La_2YO_3$ has a ratio exceeding approximately 75 mol%, the $La_2O_3$-$Y_2O_3$ pseudo binary system material becomes a $La_2O_3$ solid solution. In that case, it contains a $La_2O_3$ solid solution having a main lattice of $La_2O_3$, which has such a nature that it is low in chemical stability in the air. This is considered as a reason for which the $La_2O_3$-$Y_2O_3$ pseudo binary system material is impaired in stability in the air.

The ratio of $La_2O_3$ and the type of the $La_2O_3$-$Y_2O_3$ pseudo binary system material produced has a relationship, as will be described hereinafter with reference to the aforementioned phase diagram for a heat treatment performed at 1,860°C by way of example. According to the phase diagram, when $La_2O_3$ has a ratio exceeding 0 mol% and at most around 20 mol%, the solid solution of La-$Y_2O_3$ is produced. Similarly, when $La_2O_3$ has a ratio around 20 mol% to around 40 mol%, the mixture of the solid solution of La-$Y_2O_3$ and the composite oxide of $LaYO_3$ is produced. Similarly, when $La_2O_3$ has a ratio around 40 mol% to around 75 mol%, the composite oxide of $LaYO_3$ is produced.

Furthermore, of heat-treated and thus produced $La_2O_3$-$Y_2O_3$ pseudo binary system materials, the solid solution of La-$Y_2O_3$, the mixture of the solid solution of $LaY_2O_3$ and the composite oxide of $LaYO_3$, and the composite oxide of $LaYO_3$ also exist stably at a temperature to which they are heated when they are used as a resin molding die (i.e., approximately 180°C), and at room temperature.

These $La_2O_3$-$Y_2O_3$ pseudo binary system materials are thus shape-retentive at the aforementioned temperature (including that of the heat treatment). Thus, as has been described above, the present embodiment can provide a low adhesion material formed of a $La_2O_3$-$Y_2O_3$ pseudo binary system material and shape-retentive in the range of room temperature to the temperature of the heat treatment.

Second Embodiment

The present low adhesion material in a second embodiment will be described hereinafter. The present embodiment adopts a low adhesion material of a $SrO$-$Y_2O_3$ pseudo binary system material produced from a first material of $Y_2O_3$ and a second material of $SrO$, as based on an experiment and an analysis. More specifically, of such $SrO$-$Y_2O_3$ pseudo binary system materials, a solid solution of $Sr$-$Y_2O_3$, a mixture of a solid solution of $Sr$-$Y_2O_3$ and a composite oxide of $SrY_2O_4$, and a composite oxide of $SrY_2O_4$ are adopted. These low adhesion materials contain substances and source materials adopted as follows:

First, $Sr$ is adopted as a substance having an ionic radius larger than $Y^{3+}$, which is an ion of $Y$ contained in the first material of $Y_2O_3$. Note that $Y^{3+}$ has an ionic radius of 1.02 Å (102 pm) and $Sr^{3+}$ has an ionic radius of 1.18 Å (118 pm).

Furthermore, $SrO$ is adopted as a second material formed of an oxide satisfying both the condition that it contains a substance ($Sr$) having an ionic radius larger than $Y^{3+}$ and the condition that it is larger in basicity than $Y_2O_3$. For basicity, expressions (1) and (2) provide an IEPS indicating 9.5 for $Y_2O_3$ and 12.8 for $SrO$. It can be said that $SrO$ is further larger in basicity than $Y_2O_3$.

In the present embodiment the $SrO$-$Y_2O_3$ pseudo binary system material containing $Y_2O_3$ and $SrO$ is produced by adding $SrO$ to $Y_2O_3$ by a predetermined amount. This pseudo binary system material is produced in a method substantially identical to that described in the first embodiment. Accordingly the method will not be described repeatedly.

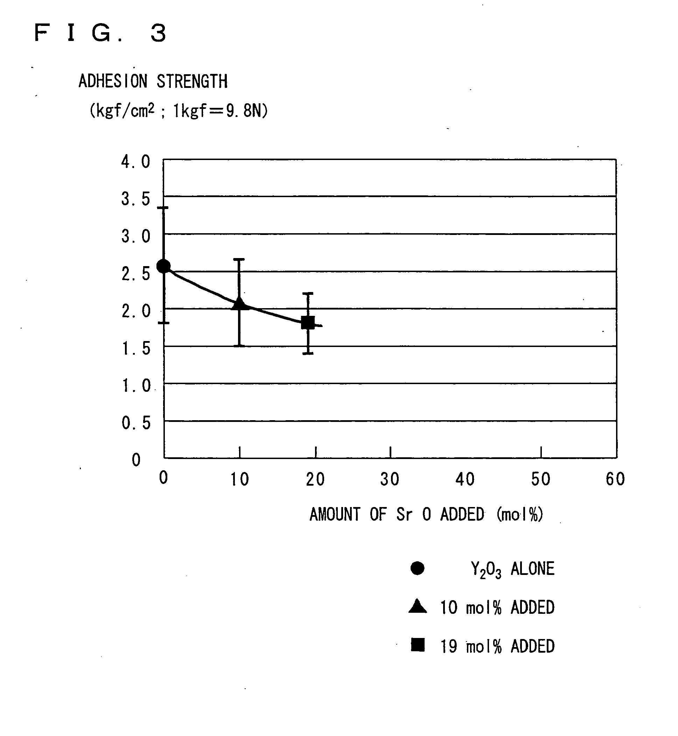

The low adhesion material of the present embodiment will now be described with reference to Fig. 3. Fig. 3 shows a relationship between an amount of $SrO$ added relative to a total of $Y_2O_3$ and the added $SrO$ in the source materials of the low adhesion material of the present embodiment, and the adhesion strength provided between a product produced from the $Y_2O_3$ and the $SrO$ and a basic substance, i.e., epoxy resin.

As shown in Fig. 3, in the present embodiment, $SrO$ is added in two different amounts of 10 mol% and 19 mol% relative to a total amount of $Y_2O_3$ and the added $SrO$ in the source materials. The two types of $SrO$-$Y_2O_3$ pseudo binary system materials are used to prepare samples. Each sample and a material with 0 mol% of $SrO$, i.e., $Y_2O_3$ alone, are used to conduct an experiment and obtain data, which is used to calculate adhesion strength. A result thereof shows, as shown in Fig. 3, that the amount of $SrO$ added increases, the adhesion strength decreases.

Furthermore it has been found that the values in adhesion strength shown in Fig. 3 all fall within a range applicable as a low adhesion material for a resin molding die. Furthermore, the samples are all satisfactorily shape retentive to such an extent that they can be used for the resin molding die. Note that the adhesion strength shown in Fig. 3 is calculated from a result of an experiment similar to that described in the first embodiment.

The samples prepared from the first material of $Y_2O_3$ and the second material of $SrO$, i.e., $SrO$-$Y_2O_3$ pseudo binary system materials are analyzed and a result is obtained, as follows: The samples containing $SrO$ added in amounts of 10 mol% and 19 mol%, respectively, are both a mixture of a solid solution of $Sr$-$Y_2O_3$ and a composite oxide of $SrY_2O_4$.

Therefrom it can be said that the mixture of the solid solution of $Sr$-$Y_2O_3$ and the composite oxide of $SrY_2O_4$ has small adhesion strength falling within a range applicable as a low adhesion material for a resin molding die, and a shape retentive property of an extent applicable to the resin molding die. The mixture of the solid solution of $Sr$-$Y_2O_3$ and the composite oxide of $SrY_2O_4$ thus corresponds to the present low adhesion material. Note that the solid solution of $Sr$-$Y_2O_3$ and the composite oxide of $SrY_2O_4$ that configure the mixture are both a $SrO$-$Y_2O_3$ pseudo binary system material produced from $Y_2O_3$ and $SrO$.

As has been described in the first embodiment, such a material that the amount of $SrO$ added thereto is 0 mol%, i.e., $Y_2O_3$ alone, can be used as a low adhesion material for a resin molding die from a practical point of view. Furthermore, as well as the first embodiment, the present embodiment can also provide the $SrO$-$Y_2O_3$ pseudo binary system material with further reduced adhesion strength by increasing the amount of $SrO$ added in the source materials.

The $SrO$-$Y_2O_3$ pseudo binary system material formed of the first material of $Y_2O_3$ and the second material of $SrO$ that contains the $SrO$ added in further increased amounts in the source materials is, however, disadvantageously reduced in stability in the air, similarly as described in the first embodiment. This is attributed to that $SrO$ has a nature allowing it to bind to carbon dioxide present in the air and thus provide carbonate ($SrCO_3$).

Furthermore this is also attributed to the fact that $SrO$ significantly reacts with moisture to produce hydroxide (for this nature, see Rikagaku Jiten, forth edition, Iwanami Shoten, 1987, p 496, for example.), and as a result prevents the low adhesion material from maintaining its shape and hence prevents the resin molding die from maintaining its shape.

Accordingly in view of shape retention it is necessary to determine an upper limit for the amount of $SrO$ added in the source materials of the $SrO$-$Y_2O_3$ pseudo binary system material and as a result it is necessary to determine an upper limit for the ratio of $SrO$ in the $SrO$-$Y_2O_3$ pseudo binary system material produced.

Accordingly, similarly as described in the first embodiment, relative to a total of $Y_2O_3$ and $SrO$ in the $SrO$-$Y_2O_3$

pseudo binary system material, the SrO has a ratio having an upper limit, which is determined according to phase diagrams, which are indicated in a document "Phase diagrams of yttrium sesquioxide-strontium oxide and ytterbium sesquioxide-strontium oxide systems" (S. G. Tresvyatskii, et al., Izv.Akad.Nauk SSSR, Neorg.Mater., 7[10] 1808-1811 (1971)) and Translation "Inorg. Mater. (Engl. Transl.), 7[10] 1614-1617 (1971)" for the document, respectively.

As has been described previously, the samples formed of source materials containing SrO added in amounts of 10 mol% and 19 mol%, as shown in Fig. 3, are $SrO$-$Y_2O_3$ pseudo binary system materials produced that are mixtures of a solid solution of $Sr$-$Y_2O_3$ and a composite oxide of $SrY_2O_4$. Furthermore, these mixtures correspond in the phase diagram to a range denoted by "$C$-$Y_2O_3ss$ + $SrY_2O_4$", which represents a $Y_2O_3$ solid solution + $SrY_2O_4$, and, as has been described previously, correspond to the present low adhesion material.

Furthermore, if a $SrO$-$Y_2O_3$ pseudo binary system material is produced from source materials including SrO added in an amount further increased from the state shown in. Fig.3, it can bee seen from the phase diagram that when SrO is added in an amount that attains a value of some extent, the $SrO$-$Y_2O_3$ pseudo binary system material is produced to be a composite oxide of $SrY_2O_4$, and from the phase diagram it can be said that in the composite oxide of $SrY_2O_4$, SrO has a ratio of 50 mol%.

Note that when the composite oxide of $SrY_2O_4$ formed of SrO and $Y_2O_3$ inferior and superior, respectively, in chemical stability in the air is compared with SrO alone, the former is completely different in nature and crystalline structure from the latter and chemically stable in the air.

Furthermore, according to the phase diagram, it can be said that the composite oxide of $SrY_2O_4$ included in a sample increases in ratio as the amount of SrO added increases. Furthermore, according to Fig. 3, adding an increased amount of SrO provides an improved adhesion property, and it is inferred that the composite oxide of SrY alone has a better property with respect to adhesion than that of $Y_2O_3$ alone. The composite oxide of $SrY_2O_4$ alone is thus considered to correspond to the present low adhesion material.

According to the phase diagram, it can be seen that when SrO is added in a further increased amount to produce a $SrO$-$Y_2O_3$ pseudo binary system material, the $SrO$-$Y_2O_3$ pseudo binary system material contains SrOss (a SrO solid solution). In that case, SrO having such a nature that it is low in chemical stability in the air will be contained in the $SrO$-$Y_2O_3$ pseudo binary system material. This is considered as a reason for which the $SrO$-$Y_2O_3$ pseudo binary system material is impaired in chemical stability in the air.

Furthermore, if a $SrO$-$Y_2O_3$ pseudo binary system material is produced from source materials including SrO added in an amount further decreased from 10 mol% (see Fig. Fig.3), it can be seen from the phase diagram that when SrO is added in an amount that attains a value of some extent, the $SrO$-$Y_2O_3$ pseudo binary system material is produced to be a $Y_2O_3ss$ (a $Y_2O_3$ solid solution), i.e., a solid solution of $Sr$-$Y_2O_3$. According to the phase diagram, when the heat treatment is performed at 1,970°C, the solid solution of $Sr$ -$Y_2O_3$ can be implemented as a $SrO$-$Y_2O_3$ pseudo binary system material containing SrO at a ratio exceeding 0 mol% and at most 1.5 mol%.

Whether the solid solution of $Sr$-$Y_2O_3$ satisfies a property required for the present low adhesion material will now be discussed as based on the following three points derived from a phase diagram of a $SrO$-$Y_2O_3$ pseudo binary system material and a result of an experiment described (including Fig. 3) and the like.

The first point is that, according to the phase diagram, SrO has a ratio smallest for $Y_2O_3$ alone, for which SrO has a ratio of 0 mol%, larger for the solid solution of $Sr$-$Y_2O_3$, and further larger for the mixture of the solid solution of $Sr$-$Y_2O_3$ and the composite oxide of $SrY_2O_4$.

The second point is that $Y_2O_3$ alone, for which SrO has a ratio of 0 mol%, provides largest adhesion to a basic substance, and the adhesion decreases as SrO increases in ratio (see Fig. Fig.3).

The third point is that $Y_2O_3$ alone and the mixture of the solid solution of $Sr$-$Y_2O_3$ and the composite oxide of $SrY_2O_4$ both have properties required for the present low adhesion material in terms of adhesion and shape retention.

Initially, of such properties, adhesion to a basic substance will be discussed. Smaller adhesion to the basic substance is preferable. SrO has a ratio larger for the solid solution of $Sr$-$Y_2O_3$ than for $Y_2O_3$ alone, as has been discussed above at the first point. Furthermore, as seen from the result of the experiment described, adhesion to a basic substance decreases as SrO increases in ratio, as has been discussed above at the second point. Therefore the solid solution of $Sr$-$Y_2O_3$ is less adhesive than $Y_2O_3$ alone.

On the other hand, $Y_2O_3$ alone, more adhesive than the solid solution of $Sr$-$Y_2O_3$, satisfies, as seen from the result of the experiment described, low adhesion required for the low adhesion material, as has been discussed above at the third point. From these matters it can be said that the solid solution of $Sr$-$Y_2O_3$ less adhesive than $Y_2O_3$ alone has an adhesion property required for the low adhesion material.

Of the properties, shape retention will then be discussed. Good shape retention is preferable. A $SrO$- $Y_2O_3$ pseudo binary system material is considered to become less shape-retentive as SrO, which has such a nature that it is low in chemical stability in the air, increases in ratio. In other words, it is the most shape retentive for $Y_2O_3$ alone, less shape retentive for the solid solution of $Sr$-$Y_2O_3$, and further less shape retentive for the mixture of the solid solution of $Sr$-$Y_2O_3$ and the composite oxide of $SrY_2O_4$.

Furthermore, from the result of the experiment described, the aforementioned mixture considered less shape retentive than the solid solution of Sr-$Y_2O_3$ has a shape retentive property required for the low adhesion material, as has been discussed above at the third point. Therefore it can be said that the solid solution of Sr-$Y_2O_3$ has a shape retentive property required for the low adhesion material. From the above discussion, the solid solution of Sr-$Y_2O_3$ is considered to correspond to the present low adhesion material.

The ratio of SrO and the type of the SrO-$Y_2O_3$ pseudo binary system material produced has a relationship, as will be described hereinafter with reference to the aforementioned phase diagram for a heat treatment performed at 1,970°C by way of example. According to the phase diagram, when SrO has a ratio exceeding 0 mol% and at most around 1.5 mol%, the solid solution of Sr-$Y_2O_3$ is produced. Similarly, when SrO has a ratio around 1.5 mol% to around 50 mol%, the mixture of the solid solution of Sr-$Y_2O_3$ and the composite oxide of $SrY_2O_4$ is produced. Similarly, when SrO has a ratio of 50 mol%, the composite oxide of $SrY_2O_4$ is alone produced.

Furthermore, of heat-treated and thus produced SrO-$Y_2O_3$ pseudo binary system materials, the solid solution of Sr-$Y_2O_3$, the mixture of the solid solution of Sr-$Y_2O_3$ and the composite oxide of $SrY_2O_4$, and the composite oxide of $SrY_2O_4$ also exist stably at a temperature to which they are heated when they are used as a resin molding die (i.e., approximately 180°C), and at room temperature.

These SrO-$Y_2O_3$ pseudo binary system materials are thus satisfactorily shape-retentive at the aforementioned temperature (including that of the heat treatment). As has been described above, the present embodiment can provide a low adhesion material formed of a SrO-$Y_2O_3$ pseudo binary system material and satisfactorily shape-retentive in the range of room temperature to the temperature of the heat treatment.

These SrO-$Y_2O_3$ pseudo binary system materials having small adhesion strength are obtained possibly on two grounds associated with ionic radius and basicity, similarly as discussed in the first embodiment. A first ground is that the SrO-$Y_2O_3$ pseudo binary system material contains Sr, a substance having an ionic radius larger than $Y^{3+}$. A second ground is that the SrO-$Y_2O_3$ pseudo binary system material contains SrO, an oxide larger in basicity than $Y_2O_3$.

Note that as has been described heretofore, the first and second embodiments provide the present low adhesion material implemented by the following six materials: (1) a solid solution of La-$Y_2O_3$; (2) a mixture of a solid solution of La-$Y_2O3$ and a composite oxide of $LaYO_3$; (3) a composite oxide of $LaYO_3$; (4) a solid solution of Sr-$Y_2O_3$; (5) a mixture of a solid solution of Sr-$Y_2O_3$ and a composite oxide of $SrY_2O_4$; and (6) a composite oxide of $SrY_2O_4$. The present low adhesion material may be the above six low adhesion materials each having an other substance added thereto as an additive.

Furthermore the present low adhesion material may be formed of two or more of the six low adhesion materials, that are combined together as appropriate and thus mixed together at an appropriate ratio. In that case, a low adhesion material formed of three components of $Y_2O_3$, La and Sr, i.e., a $La_2O_3$-SrO-$Y_2O_3$ pseudo ternary system material may be formed. Furthermore, a low adhesion material of three components of $Y_2O_3$, La and Sr with one or more different substances added thereto, i.e., a higher order, multi-component material can also be used as the present low adhesion material.

Furthermore, the low adhesion material may also be provided by a mixture of the first material of $Y_2O_3$ alone and at least one of the solid solution of La-$Y_2O_3$, the mixture of the solid solution of La-$Y_2O_3$ and the composite oxide of $LaYO_3$, and the composite oxide of $LaYO_3$. Furthermore it can also be provided by a mixture of the first material of $Y_2O_3$ alone and at least one of the solid solution of Sr-$Y_2O_3$, the mixture of the solid solution of Sr-$Y_2O_3$ and the composite oxide of $SrY_2O_4$, and the composite oxide of $SrY_2O_4$.

Furthermore as the second material an oxide has been described that satisfies both the condition that it contains a substance having an ionic radius larger than $Y^{3+}$, which is an ion of Y contained in the first material of $Y_2O_3$, and the condition that it is larger in basicity than $Y_2O_3$. However, the second material is not limited thereto. For some property of a basic substance, some level of small adhesion required, and the like, it may be an oxide that satisfies at least one of the condition that it contains a substance having an ionic radius larger than $Y^{3+}$ and the condition that it is larger in basicity than $Y_2O_3$.

Furthermore, as has been described in the first and second embodiments, the present low adhesion material is produced as an oxide is added to $Y_2O_3$, and the oxide added to $Y_2O_3$ contains a substance having an ionic radius larger than $Y^{3+}$, an ion contained in $Y_2O_3$, and the substance is La and Sr. However, the present low adhesion material is not limited thereto and may be produced from $Y_2O_3$ having added thereto an oxide containing a substance different from La and Sr as a substance having an ionic radius larger than $Y^{3+}$. A material produced with such oxide can also serve as the present low adhesion material.

Furthermore, to the first material of $Y_2O_3$, the second material (or an additive) is added in an amount having a lower limit, as will be described hereinafter. As is apparent from Figs. 2 and 3, when an additive is added to $Y_2O_3$ to produce a material, the material is less adhesive to a basic substance. This means that adding the second material (or the additive) to the first material or $Y_2O_3$ has provided an effect of the present invention, i.e., reduced adhesion strength. In other words, that the second material (or the additive) has a ratio exceeding 0 mol% can be a lower limit of the ratio of the second material.

Third Embodiment

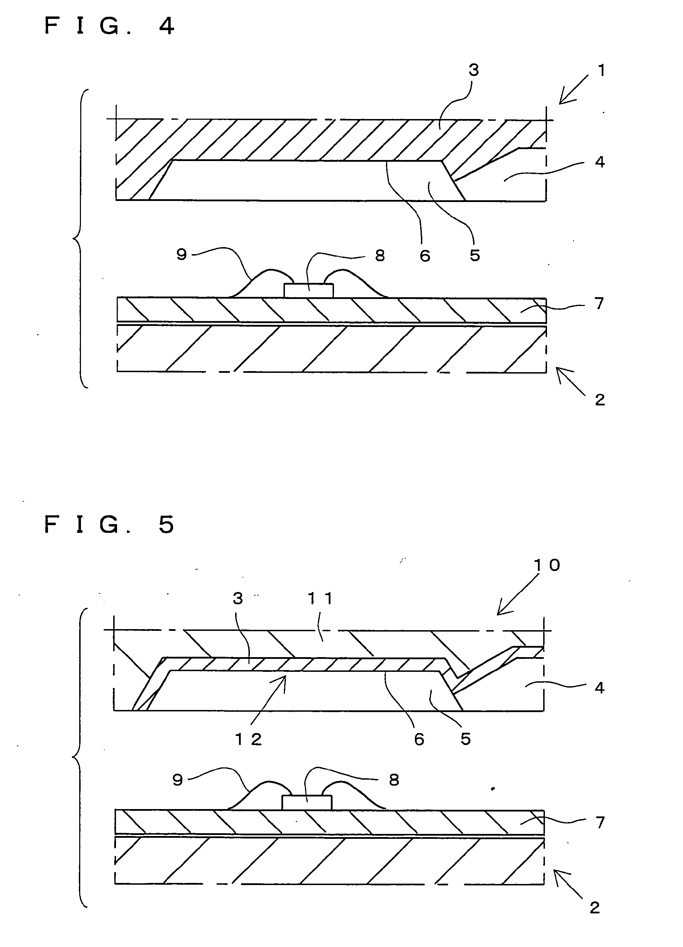

The present invention in a third embodiment provides a resin molding die, as will be described hereinafter with reference to Figs. 4 and 5. Figs. 4 and 5 are cross sections of a resin molding die of the present embodiment and an exemplary variation thereof, respectively, both of which are exaggerated for ease of illustration.

Furthermore in the present embodiment a case will be described in which transfer molding is employed as an example of a resin molding method and a chip mounted on a substrate is sealed with epoxy resin.

In this resin sealing, a wired chip is accommodated in a cavity of the die. Then, the die is closed, and, with the die closed, fluid resin is introduced into the cavity and set. A molded object, or a package, having a substrate and the set resin is thus completed.

Figs. 4 and 5 show top and bottom portions 1 and 2, respectively, together configuring a resin sealing die.

Top portion 1 corresponds to the present resin molding die. Top portion 1 is formed of the present low adhesion material for example of the first embodiment, i.e., a highly releasable material 3 made of a solid solution of La-$Y_2O_3$.

Top portion 1 is provided with a resin flow channel 4 passing fluid resin (not shown) and a cavity 5 receiving the fluid resin. Resin flow channel 4 and cavity 5 are provided in the form of a recess. Accordingly, highly releasable material 3 is exposed in resin flow channel 4 and cavity 5 at a molding surface 6 i.e., at a portion of the resin molding die that is exposed to the fluid resin.

On the other hand, bottom portion 2 is formed of tool steel or the like, and thereon a substrate 7 formed of a lead frame, a printed substrate and the like is placed. On substrate 7 a chip 8 is mounted, and substrate 7 and chip 8 have their respective electrodes (not shown) electrically connected by a wire 9.

The resin molding die shown in Figs. 4 and 5 operates, as will be described hereinafter. First, substrate 7 is positioned on bottom portion 2 and then fixed by suction or the like. Then, top portion 1 descends and cooperates with bottom portion 2 to completely close the die. Thereafter, a plunger (not shown) is used to push a fluid resin, which is made of a thermosetting resin and has a predetermined viscosity, to introduce the fluid resin through resin flow channel 4 into cavity 5.

Then a heater (not shown) provided at top portion 1 and bottom portion 2 is used to heat and thus set the fluid resin. Then top portion 1 ascends to open the die, and a molded product formed of substrate 7, chip 8 and wire 9 integrally sealed with the set resin is ejected.

The resin molding die in the present embodiment is characterized by having top portion 1 exposed to fluid resin, that is configured of highly releasable material 3 formed of the solid solution La-$Y_2O_3$ described in the first embodiment. Thus, top portion 1 will have molding surface 6 exposed to the fluid resin, that is configured of highly releasable material 3.

Highly releasable material 3 has an excellent low adhesion property with respect to set resin provided by setting fluid resin and is also a chemically stable substance. This low adhesion property contributes to excellent releasability from the set resin, a property preventing the set resin from readily soiling and thus adhering to the molding surface, and a property helping to remove such soil adhering to the molding surface. Thus the present embodiment can implement a resin molding die that does not require an ejection mechanism, can maintain excellent releasability for a long period of time, and does not require frequent cleaning. Furthermore, the present embodiment can implement a resin molding die superior in releasability in comparison with a resin molding die having a molding surface with Cr, TiC, CrN or a similar, metal based material deposited thereon.

Furthermore, a ceramic material produced from an oxide, such as a solid solution of La-$Y_2O_3$ produced from $Y_2O_3$ and $La_2O_3$, is excellently wear-resistant. This can eliminate the problem of the wearing of an organic matter coating a molding surface.

The resin molding die of the present embodiment is produced by processing, as required, such as providing an attachment hole to, the low adhesion material (the solid solution of La-$Y_2O_3$) produced in the first embodiment and having a predetermined geometry such as resin flow channel 4, cavity 5 and the like. Furthermore, if a more precise geometry is required, the low adhesion material that is in the form of a block or burnt to generally have a predetermined geometry may be cut or the like and thus undergo precision processing. Thus, top portion 1 shown in Figs. 4 and 5, for example, can be completed.

The Fig. 4 resin molding die in an exemplary variation will now be described with reference to Fig. 5. A top portion 10 corresponds to the resin molding die of the present exemplary variation. Resin molding die 10 has top portion 10 having a main body 11 formed of a material conventionally used for a resin molding die, such as tool steel, and a mold releasing layer 12 in the form of a layer or film formed of the low adhesion material of the first embodiment (the solid solution of La-$Y_2O_3$) deposited on a surface of main body 11.

Mold releasing layer 12 is provided using a well-known, appropriate technique selected e.g., from vacuum deposition, electronic beam deposition, sputtering, plasma spraying, ion plating or similar physical vapor deposition (PVD), chemical vapor deposition (CVD), or burning a material in the form of sheet. Mold releasing layer 12 present on molding surface 6 can provide an effect similar to that obtained by the resin molding die shown in Fig. 4. Note that the low adhesion material of the first embodiment provided at least on molding surface 6, suffices. This allows molding surface 6 to have an excellent low adhesion property with respect to set resin, i.e., excellent releasability.

In the present exemplary variation, mold releasing layer 12 formed of the low adhesion material can be determined in thickness as appropriate. If small adhesion alone is considered, mold releasing layer 12 is only required to have a thickness of an extent allowing a unit cell formed of the low adhesion material to be formed, i.e., a thickness of approximately a few nm. If durability and the like are also considered, it is preferable that mold releasing layer 12 in effect defining molding surface 6 of the resin molding die have a predetermined thickness (for example of approximately a few hundreds $\mu$m).

In the present exemplary variation a material other than tool steel and the like can also be used to configure main body 11 of the molding die. For example, the molding die may have main body 11 formed of hard metal containing tungsten carbide (WC), a ceramic material formed for example of 3 mol% yttria stabilized zirconia (3YSZ), or the like.

Note that as described above, the present embodiment (including the exemplary variation) has provided a resin molding die having a molding surface formed of the low adhesion material of the first embodiment, i.e., a solid solution of La-$Y_2O_3$. However, the present low adhesion material is not limited thereto, and it may be those described in the first and second embodiments. Furthermore the low adhesion materials of the first and second embodiments with an other substance added thereto as an additive may be used as a low adhesion material forming a molding surface.

Furthermore, two or more of the low adhesion materials of the first and second embodiments, that are combined together, as appropriate, and thus mixed together at an appropriate ratio may be adopted as a low adhesion material forming a molding surface. Furthermore, $Y_2O_3$ having added thereto an oxide containing a substance different from La and Sr as a substance having an ionic radius larger than $Y^{3+}$ may be adopted as a low adhesion material forming a molding surface. Such materials can also provide an effect similar to that of the present embodiment and exemplary variation.

Furthermore, if a resin molding die has a molding surface configured of the low adhesion material, the low adhesion material that is in the form of a block (or rectangular parallelepiped) may be used as a cavity block configuring a bottom surface or a top surface of the cavity.

Furthermore, the present embodiment has been described by illustrating a resin molding die used when chip 8 mounted on substrate 7 is sealed with resin. However, the present resin molding die is not limited thereto. It is also applicable to a resin molding die used in general transfer molding, compression molding, injection molding, and the like when fluid resin is introduced into cavity 5 and thus set to provide a molded object.

Furthermore, while the resin molding die is exposed to fluid resin at molding surface 6 entirely configured of a highly releasable material, the present resin molding die is not limited thereto and may be exposed to the fluid resin at molding surface 6 having only a portion, e.g., an internal bottom surface of cavity 5 (a top surface thereof in Figs. 4 and 5), formed of the highly releasable material.

Furthermore, while the present low adhesion material is used for a resin molding die, as has been described above, the present low adhesion material is not limited thereto in application. It can be used in an application other than the resin molding die, i.e., an other application requiring low wettability to a basic substance. More specifically, such low adhesion material can be used to coat such a portion of a member or the like that is exposed to fluid resin.

Furthermore, the present low adhesion material is applicable to an application requiring a low adhesion property with respect to a substance other than resin and having basicity. For example, such low adhesion material can be used as a material having a function preventing an organic matter from soiling it and thus adhering thereto. More specifically, the present low adhesion material would be used as a material for a building material used for such as an external wall of a building, a bathtub, sanitary chinaware, and other similar equipment. The present low adhesion material may also be used as a material for coating a surface of a member used in such applications.

Note that the aforementioned low adhesion material 3 can also be used as a soil resistant material having a function preventing an organic matter from soiling it and thus adhering thereto.

Although the present invention has been described and illustrated in detail, it is clearly understood that the same is by way of illustration and example only and is not to be taken by way of limitation, the scope of the present invention being limited only by the terms of the appended claims.

## Claims

1. A low adhesion material (3) having a low adhesion property with respect to a basic substance, the low adhesion material (3) being produced at least from a first material of $Y_2O_3$ and a second material and being shape-retentive when said second material has a ratio having a predetermined value relative to a total of said first and second materials, said second material being formed of an oxide, said oxide satisfying at least one of a condition that said oxide contains a substance having an ionic radius larger than $Y^{3+}$ and a condition that said oxide is larger in basicity than said first material.

**2.** The low adhesion material (3) according to claim 1, wherein:

said second material is formed of $La_2O_3$; and
the low adhesion material (3) at least includes a solid solution produced from said first and second materials.

**3.** The low adhesion material (3) according to claim 1, wherein:

said second material is formed of $La_2O_3$; and
the low adhesion material (3) at least includes a composite oxide produced from said first and second materials.

**4.** The low adhesion material (3) according to claim 1, wherein:

said second material is formed of $La_2O_3$; and
the low adhesion material (3) is a mixture at least including a solid solution produced from $Y_2O_3$ and $La_2O_3$ and a composite oxide produced from $Y_2O_3$ and $La_2O_3$.

**5.** The low adhesion material (3) according to claim 1, wherein:

said second material is formed of SrO; and
the low adhesion material (3) at least includes a solid solution produced from said first and second materials.

**6.** The low adhesion material (3) according to claim 1, wherein:

said second material is formed of SrO; and
the low adhesion material (3) at least includes a composite oxide produced from said first and second materials.

**7.** The low adhesion material (3) according to claim 1, wherein:

said second material is formed of SrO; and
the low adhesion material (3) is a mixture at least including a solid solution produced from $Y_2O_3$ and SrO and a composite oxide produced from $Y_2O_3$ and SrO.

**8.** A low adhesion material (3) having a low adhesion property with respect to a basic substance, the low adhesion material (3) being produced at least from a first material of $Y_2O_3$ and a plurality of materials other than said first material and being shape-retentive when said plurality of materials each have a ratio having a predetermined value relative to a total of said first material and said plurality of materials, said plurality of materials being each formed of an oxide, said oxide each satisfying at least one of a condition that said oxide contains a substance having an ionic radius larger than $Y^{3+}$ and a condition that said oxide is larger in basicity than said first material.

**9.** A resin molding die (1) having a cavity and used to set basic fluid resin introduced in said cavity to provide set resin, the resin molding die having a molding surface (6) defined by a surface exposed to said fluid resin, the resin molding die having a low adhesion property between said molding surface (6) and said set resin, said molding surface (6) having at least a portion formed of a low adhesion material (3), said low adhesion material (3) being produced at least from a first material of $Y_2O_3$ and a second material and being shape-retentive when said second material has a ratio having a predetermined value relative to a total of said first and second materials, said second material being formed of an oxide, said oxide satisfying at least one of a condition that said oxide contains a substance having an ionic radius larger than $Y^{3+}$ and a condition that said oxide is larger in basicity than said first material.

**10.** A resin molding die (1) having a cavity and used to set basic fluid resin introduced in said cavity to provide set resin, the resin molding die having a molding surface (6) defined by a surface exposed to said fluid resin, the resin molding die having a low adhesion property between said molding surface (6) and said set resin, said molding surface (6) having at least a portion formed of a low adhesion material (3), said low adhesion material (3) being produced at least from a first material of $Y_2O_3$ and a plurality of materials other than said first material and being shape-retentive when said plurality of materials each have a ratio having a predetermined value relative to a total of said first material and said plurality of materials, said plurality of materials being each formed of an oxide, said oxide each satisfying at least one of a condition that said oxide contains a substance having an ionic radius larger than $Y^{3+}$ and a condition that said oxide is larger in basicity than said first material.

**11.** A soil resistant material (3) having a function preventing an organic matter from soiling the same and thus adhering thereto, the soil resistant material (3) being produced at least from a first material of $Y_2O_3$ and a second material and being shape-retentive when said second material has a ratio having a predetermined value relative to a total of said first and second materials, said second material being formed of an oxide, said oxide satisfying at least one of a condition that said oxide contains a substance having an ionic radius larger than $Y^{3+}$ and a condition that said oxide is larger in basicity than said first material.

**12.** The soil resistant material (3) according to claim 11, wherein:

said second material is formed of $La_2O_3$; and
the soil resistant material (3) at least includes a solid solution produced from said first and second materials.

**13.** The soil resistant material (3) according to claim 11, wherein:

said second material is formed of $La_2O_3$; and
the soil resistant material (3) at least includes a composite oxide produced from said first and second materials.

**14.** The soil resistant material (3) according to claim 11, wherein:

said second material is formed of $La_2O_3$; and
the soil resistant material (3) is a mixture at least including a solid solution produced from $Y_2O_3$ and $La_2O_3$ and a composite oxide produced from $Y_2O_3$ and $La_2O_3$.

**15.** The soil resistant material (3) according to claim 11, wherein:

said second material is formed of SrO; and
the soil resistant material (3) at least includes a solid solution produced from said first and second materials.

**16.** The soil resistant material (3) according to claim 11, wherein:

said second material is formed of SrO; and
the soil resistant material (3) at least includes a composite oxide produced from said first and second materials.

**17.** The soil resistant material (3) according to claim 11, wherein:

said second material is formed of SrO; and
the soil resistant material (3) is a mixture at least including a solid solution produced from $Y_2O_3$ and SrO and a composite oxide produced from $Y_2O_3$ and SrO.

**18.** A soil resistant material (3) having a function preventing an organic matter from soiling the same and thus adhering thereto, the soil resistant material (3) being produced at least from a first material of $Y_2O_3$ and a plurality of materials other than said first material and being shape-retentive when said plurality of materials each have a ratio having a predetermined value relative to a total of said first material and said plurality of materials, said plurality of materials being each formed of an oxide, said oxide each satisfying at least one of a condition that said oxide contains a substance having an ionic radius larger than $Y^{3+}$ and a condition that said oxide is larger in basicity than said first material.

# F I G . 1

```
                    ┌──────────────────────────────┐
                    │            START              │
                    └──────────────────────────────┘
                                   │
                    ┌──────────────────────────────┐         S 1
                    │        PREPARE  Y₂O₃          │
                    └──────────────────────────────┘
                                   │
                    ┌──────────────────────────────┐         S 2
                    │         ADD  La₂O₃            │
                    └──────────────────────────────┘
                                   │
                    ┌──────────────────────────────┐         S 3
                    │         ADD SOLVENT           │
                    └──────────────────────────────┘
                                   │
                    ┌──────────────────────────────┐         S 4
                    │       MIX BY BALL MILL        │
                    └──────────────────────────────┘
                                   │
                    ┌──────────────────────────────┐         S 5
                    │         DRY & SIEVE           │
                    └──────────────────────────────┘
                                   │
                    ┌──────────────────────────────┐         S 6
                    │         MOLD IN DIE           │
                    └──────────────────────────────┘
                                   │
                    ┌──────────────────────────────┐         S 7
                    │          HOT PRESS            │
                    └──────────────────────────────┘
                                   │
                    ┌──────────────────────────────┐         S 8
                    │        HEAT TREATMENT         │
                    └──────────────────────────────┘
                                   │
                 ┌───────────────────────────────────┐
                 │  La₂O₃ ADDED MATERIAL COMPLETED    │
                 └───────────────────────────────────┘
```

# F I G. 2

ADHESION STRENGTH

(kgf/cm$^2$ ; 1kgf＝9.8N)

AMOUNT OF La$_2$O$_3$ ADDED (mol%)

●     Y$_2$O$_3$ ALONE

▲    5 mol% ADDED

■   10 mol% ADDED

◆   30 mol% ADDED

✕   50 mol% ADDED

# F I G . 3

ADHESION STRENGTH
(kgf/cm$^2$ ; 1kgf=9.8N)

AMOUNT OF Sr O ADDED (mol%)

● Y$_2$O$_3$ ALONE

▲ 10 mol% ADDED

■ 19 mol% ADDED

# F I G .  4

# F I G .  5

**INTERNATIONAL SEARCH REPORT**

| International application No. |
|---|
| PCT/JP2006/326025 |

A. CLASSIFICATION OF SUBJECT MATTER
*C04B35/50*(2006.01)i, *B29C33/38*(2006.01)i

According to International Patent Classification (IPC) or to both national classification and IPC

B. FIELDS SEARCHED

Minimum documentation searched (classification system followed by classification symbols)
C04B35/50, C04B41/50, C04B41/65, C04B41/87, B29C33/38

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 4-164859 A   (Onoda Cement Co., Ltd.),<br>10 June, 1992 (10.06.92),<br>Claim 1; page 2, upper left column, line 16<br>to upper right column, line 13<br>(Family: none) | 1-4<br>8-14,18<br>5-7,15-17 |
| X<br>Y<br>A | JP 2000-159619 A   (Toto Ltd.),<br>13 June, 2000 (13.06.00),<br>Claims 1 to 11; Par. No. [0002]; samples 7 to 9<br>(Family: none) | 1,11<br>9<br>2-8,10,12-18 |
| Y<br>A | JP 2005-274478 A   (TOWA Corp.),<br>06 October, 2005 (06.10.05),<br>Par. Nos. [0027] to [0034], [0056]; Figs. 1, 2<br>& WO 2005/092587 A1 | 8-14,18<br>5-7,15-17 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 February, 2007 (07.02.07) | 20 February, 2007 (20.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7329099 A

- JP 2005274478 A

### Non-patent literature cited in the description

- Rikagaku Jiten. Iwanami Shoten, 1987, 161
- **GEORGE A. PARKS.** *The Isoelectric Points of Solid Oxides, Solid Hydroxides, and Aqueous Hydroxo Complex System,* 1965, vol. 65, 177-198
- Rikagaku Jiten. Iwanami Shoten, 1987, 503
- **MASAO MIZUNO et al.** Phase Diagram of the System La2O3-Y2O3 at High Temperatures. *Yogyo-Kyokai-Shi,* 1976, vol. 84 (7), 347

- Rikagaku Jiten. Iwanami Shoten, 1987, 496
- **S. G. TRESVYATSKII et al.** Phase diagrams of yttrium sesquioxide-strontium oxide and ytterbium sesquioxide-strontium oxide systems. *Izv.Akad.Nauk SSSR, Neorg.Mater.,* 1971, vol. 7 (10), 1808-1811
- *Inorg. Mater. (Engl. Transl.,* 1971, vol. 7 (10), 1614-1617